# EUROPÄISCHE PATENTSCHRIFT

(11) **EP 3 273 001 B1**
(45) Veröffentlichungstag und Bekanntmachung des Hinweises auf die Patenterteilung: **26.02.2020**
(21) Anmeldenummer: 17182137.4
(22) Anmeldetag: 19.07.2017
(51) Int. Cl.: F01D 5/14, F01D 9/04, B23P 15/00, B23P 15/02

(54) **VERFAHREN ZUM HERSTELLEN EINES TANDEM-LEITSCHAUFELSEGMENTS**
METHODS OF MANUFACTURING A TANDEM GUIDE VANE SEGMENT
PROCÉDÉ DE FABRICATION D'UN ÉLÉMENT D'AUBE EN TANDEM

(30) Priorität: 22.07.2016 DE 102016113568
(43) Veröffentlichungstag der Anmeldung: 24.01.2018
(60) Teilanmeldung: 18204607.8
(73) Patentinhaber: Rolls-Royce Deutschland Ltd & Co KG, 15827 Blankenfelde-Mahlow (DE)
(72) Erfinder: KÖHNE, Oliver, 15827 Blankenfelde-Mahlow (DE); GÖPPINGER, Felix, 15827 Blankenfelde-Mahlow (DE)
(74) Vertreter: Müller, Wolfram Hubertus

(56) Entgegenhaltungen:
- EP-A1- 2 921 714
- EP-A1- 2 921 716
- DE-A1-102012 215 412
- US-A- 6 099 245
- US-A1- 2015 027 131

## Beschreibung

Die Erfindung betrifft Verfahren zum Herstellen eines Tandem-Leitschaufelsegments. Solche Leitschaufelsegmente werden in einem Verdichter einer Gasturbine zur Bildung einer Schaufelreihengruppe eingesetzt.

Tandem-Leitschaufeln bieten aerodynamische Vorteile in der Konstruktion von Axialverdichtern in Gasturbinen. Tandem-Leitschaufelsegmente sind beispielsweise aus der US 2015/0027131 A1 bekannt.

Bisher wurden Tandem-Leitschaufeln primär im Hinblick auf ihre strukturelle Ausgestaltung beschrieben, beispielsweise im Hinblick auf Schaufelüberlappung, Spaltweite und Staffelungswinkel. Es besteht ein Bedarf, Verfahren bereitzustellen, mit denen Tandem-Leitschaufeln in effektiver Weise bereitgestellt werden können.

Aus der EP 2 921 716 A1 ist ein gattungsgemäßes Verfahren zum Herstellen eines Tandem-Leitschaufelsegments bekannt. Das Tandem-Leitschaufelsegment umfasst eine vordere Leitschaufel und eine hintere Leitschaufel, die jeweils mit einer Basis verbunden sind. Dabei ragt die vordere Leitschaufel über die Basis der hinteren Leitschaufel. In ähnlicher Weise offenbart auch die EP 2 921 714 A1 ein Tandem-Leitschaufelsegment, das eine vordere Leitschaufel und eine hintere Leitschaufel aufweist, die jeweils mit einer Basis verbunden sind.

Aus der US 2015/0027131 A1 ist ein Verfahren zum Herstellen eines Tandem-Leitschaufelsegments bekannt, das als Komponenten eine äußere Plattform, eine vordere Leitschaufel und eine hintere Leitschaufel umfasst, wobei Ausgestaltungen vorsehen, dass eine Leitschaufel als gesondertes Bauteil hergestellt und mit einem weiteren Bauteil verbunden wird. Eine derartige Offenbarung weist auch die US 6 099 245 A auf.

Die DE 10 2012 215 412 A1 beschreibt eine Baugruppe einer Axialturbomaschine und ein Verfahren zur Herstellung einer solchen Baugruppe. Dabei sieht eine Ausgestaltung vor, dass mindestens zwei Nachleiträder eines Verdichters in Tandemanordnung angeordnet sind, wobei die mindestens zwei Nachleiträder als gesonderte Teile hergestellt und miteinander verschweißt oder verschraubt werden.

Der vorliegenden Erfindung liegt die Aufgabe zugrunde, Verfahren zum Herstellen eines Tandem-Leitschaufelsegments anzugeben.

Diese Aufgabe wird durch ein Verfahren mit den Merkmalen des Anspruchs 1 und ein Verfahren mit den Merkmalen des Anspruchs 4 gelöst. Ausgestaltungen der Erfindung sind in den Unteransprüchen angegeben.

Das herzustellende Tandem-Leitschaufelsegments umfasst eine äußere Plattform, eine vordere Leitschaufel und eine hintere Leitschaufel, wobei die vordere Leitschaufel und die hintere Leitschaufel relativ zueinander fest angeordnet sind und zwischen sich einen Spalt ausbilden. Die vordere Leitschaufel und die hintere Leitschaufel können überlappend oder mit axialem Abstand angeordnet sein. Das herzustellende Tandem-Leitschaufelsegment kann des Weiteren eine innere Plattform aufweisen, die einen Bestandteil eines inneren Deckbandes bildet.

Die vorliegende Erfindung sieht gemäß einem ersten Erfindungsaspekt ein Verfahren zum Herstellen eines Tandem-Leitschaufelsegments vor, bei dem die vordere Leitschaufel und die hintere Leitschaufel einander in axialer Richtung überlappen. Das Verfahren sieht das Herstellen eines integralen vorderen Segmentabschnitts vor, der die vordere Leitschaufel und einen vorderen Abschnitt der äußeren Plattform umfasst. Des Weiteren wird ein integraler hinterer Segmentabschnitt hergestellt, der die hintere Leitschaufel und einen hinteren Abschnitt der äußeren Plattform umfasst. Anschließend werden die beiden Segmentabschnitte miteinander verbunden.

Gemäß diesem ersten Erfindungsaspekt werden somit ein integraler vorderer Segmentabschnitt und ein integraler hinterer Segmentabschnitt gesondert hergestellt und miteinander verbunden.

Dabei sieht der erste Erfindungsaspekt weiter vor, dass
- der vordere Segmentabschnitt im Bereich der äußeren Plattform eine hintere, sich um Wesentlich in Umfangsrichtung erstreckende Begrenzungslinie zum hinteren Segmentabschnitt ausbildet,
- der hintere Segmentabschnitt im Bereich der äußeren Plattform eine vordere, sich im Wesentlichen in Umfangsrichtung erstreckende Begrenzungslinie zum vorderen Segmentabschnitt aufweist,
- die beiden Begrenzungslinien S-förmig oder Z-förmig ausgebildet werden, wobei die vordere Leitschaufel nicht über die hintere Begrenzungslinie und die hintere Leitschaufel nicht über die vordere Begrenzungslinie absteht, und
- die beiden Segmentabschnitte entlang der beiden Begrenzungslinie miteinander verbunden werden.

Hierbei wird angemerkt, dass die genannten Begrenzungslinien genau genommen Begrenzungsflächen sind, die sich in radialer Richtung erstrecken und eine Stirnfläche der äußeren Plattform bilden. Die beiden Begrenzungslinien werden beispielsweise durch spanende Verfahren ausgebildet. Sie werden an ihren Stirnseiten beispielsweise durch Hartlöten oder andere thermische Fügeverfahren (z.B. Schweißen) miteinander verbunden.

Die Ausbildung des vorderen Segmentabschnitts und des hinteren Segmentabschnitts dahingehend, dass diese im Bereich der äußeren Plattform eine S-förmige oder Z-förmige Begrenzung zum axial benachbarten Segmentabschnitt aufweisen, ist mit dem Vorteil verbunden, dass der durch die S-Form bzw. Z-Form bereitgestellte axiale Vorsprung in Richtung des axial benachbarten Segmentabschnitts dazu genutzt werden kann, die Leitschaufel überlappend mit der Leitschaufel des benachbarten Segmentabschnitts anzuordnen, ohne dass diese übersteht, d.h. ohne dass die vordere Leitschaufel axial über die hintere Begrenzungslinie des vorderen Segmentabschnitts und die hintere Leitschaufel axial über die vordere Begrenzungslinie des hinteren Segmentabschnitts absteht. Die Fertigung von überstehenden Leitschaufeln kann dadurch vermieden werden.

Ein weiterer Vorteil dieser Anordnung besteht darin, dass die beiden Segmentabschnitte aufgrund der S-Form oder Z-Form der Begrenzungslinien, an denen sie miteinander verbunden werden, exakt zueinander positionierbar sind. Denn durch diese Form wird ein Anschlag bereitgestellt, der es erlaubt, die beiden Segmentabschnitte und dadurch auch die beiden Leitschaufeln exakt relativ zueinander zu positionieren.

Es kann vorgesehen sein, dass das herzustellende Tandem-Leitschaufelsegment zusätzlich eine innere Plattform umfasst, wobei der vordere Segmentabschnitt des Weiteren einen vorderen Abschnitt der innere Plattform und der hintere Segmentabschnitt des Weiteren einen hinteren Abschnitt der inneren Plattform umfasst. Es werden somit ein integraler vorderer Segmentabschnitt und ein integraler hinterer Segmentabschnitt, die jeweils auch einen Abschnitt der inneren Plattform umfassen, gesondert bereitgestellt und miteinander verbunden.

Dabei ist vorgesehen, dass auch die Begrenzungslinien im Bereich der inneren Plattform S-förmig oder Z-förmig ausgebildet sind. Dementsprechend sieht eine Ausgestaltung vor, dass
- der vordere Segmentabschnitt im Bereich der inneren Plattform eine hintere Begrenzungslinie zum hinteren Segmentabschnitt ausbildet,
- der hintere Segmentabschnitt im Bereich der inneren Plattform eine vordere Begrenzungslinie zum vorderen Segmentabschnitt aufweist,
- die beiden Begrenzungslinien S-förmig oder Z-förmig ausgebildet werden derart, dass die vordere Leitschaufel nicht über die hintere Begrenzungslinie und die hintere Leitschaufel nicht über die vordere Begrenzungslinie absteht, und
- die beiden Segmentabschnitte zusätzlich entlang der beiden Begrenzungslinien im Bereich der inneren Plattform miteinander verbunden werden.

Gemäß einer weiteren Ausgestaltung der Erfindung ist vorgesehen, dass das herzustellende Tandem-Leitschaufelsegment zusätzlich eine innere Plattform umfasst, wobei die innere Plattform integral nur mit dem vorderen Segmentabschnitt ausgebildet ist. Die innere Plattform ist somit ausschließlich mit dem vorderen Segmentabschnitt verbunden. Der integrale hintere Segmentabschnitt umfasst den hinteren Abschnitt der äußeren Plattform und die - in Kragarm-Ausführung ausgebildete - hintere Leitschaufel, die dementsprechend an der Nabenseite ohne weitere Struktur ausgebildet ist.

Die vorliegende Erfindung sieht gemäß einem zweiten Erfindungsaspekt ein Verfahren zum Herstellen eines Tandem-Leitschaufelsegments vor, das die Schritte umfasst:
- Herstellen der äußeren Plattform und einer der Leitschaufeln als erstes integrales Bauteil;
- Herstellen der inneren Plattform und der anderen Leitschaufel als zweites integrales Bauteil;
- Verbinden der beiden integralen Bauteile, indem das radial äußere Schaufelende der anderen Leitschaufel mit der äußeren Plattform und das radial innere Schaufelende der einen Leitschaufel mit der inneren Plattform verbunden wird.

Diese Erfindungsvariante beruht somit auf dem Konzept, zwei integrale Bauteile miteinander zu verbinden, an denen jeweils eine der Leitschaufeln integral ausgebildet ist. Dabei ist beispielsweise die äußere Plattform mit der vorderen Leitschaufel und die innere Plattform mit der hinteren Leitschaufel integral hergestellt (oder umgekehrt).

Das Verbinden der beiden integralen Bauteile erfolgt beispielsweise, indem Vorsprünge der Leitschaufeln jeweils in Aussparungen der Plattformen eingesetzt werden, also unter Ausbildung von Strukturen, die eine Steckverbindung ermöglichen.

Der Begriff Tandem-Leitschaufelsegment im Sinne der vorliegenden Erfindung ist dahingehend zu verstehen, dass das Schaufelsegment zumindest eine vordere und eine hintere Leitschaufel umfasst, so dass die aus den Segmenten gebildete Schaufelreihengruppe mindestens zwei Schaufelreihen umfasst. Grundsätzlich können zwischen den vorderen und hinteren Leitschaufeln eine oder mehrere weitere Leitschaufeln angeordnet sind, für welchen Fall die aneinander gesetzten Segmente eine Schaufelreihengruppe mit mehr als zwei Schaufelreihen bilden.

Als äußere Plattform wird eine Struktur bezeichnet, die den Hauptströmungspfad im Bereich einer Leitschaufel radial außen begrenzt und die dafür vorgesehen und geeignet ist, eine Leitschaufel radial außen zu fixieren. Die Fixierung erfolgt typischerweise in einer Struktur, die Teil des Verdichtergehäuses oder mit dem Verdichtergehäuse verbunden ist. Als innere Plattform wird eine Struktur verstanden, die den Hauptströmungspfad radial innen berandet. Die innere Plattform bildet dabei typischerweise einen Bestandteil einer Deckbandanordnung.

Es wird darauf hingewiesen, dass die äußere und die innere Plattform fest fixiert oder verstellbar ausgebildet sein können. In letzterem Fall sind die Plattformen in der Nabe und im Gehäuse des Verdichters beispielsweise über Zapfen drehbar gelagert.

Eine Ausgestaltung der Erfindung sieht vor, dass die äußere Plattform des Tandem-Leitschaufelsegments rechteckförmig ausgebildet ist und geradlinig in axialer Richtung verlaufende Begrenzungslinien aufweist. Sich geradlinig in axialer Richtung verlaufende Begrenzungslinien führen dazu, dass die Begrenzungslinien der aneinander in Umfangsrichtung angrenzenden Tandem-Leitschaufelsegmente sich aerodynamisch nicht oder in nur geringem Maße nachteilig auswirken.

Eine weitere Ausgestaltung der Erfindung sieht vor, dass ein Tandem-Leitschaufelsegment genau eine vordere Leitschaufel und genau eine hintere Leitschaufel umfasst. Dies kann in Ausgestaltungen der Erfindung vorteilhaft sein. Eine andere Ausgestaltung der Erfindung sieht vor, dass ein Tandem-Leitschaufelsegment mehrere in Umfangsrichtung beabstandete vordere Leitschaufeln und mehrerer in Umfangsrichtung beabstandete hintere Leitschaufel umfasst, wobei jeweils eine vordere Leitschaufel und eine hintere Leitschaufel eine Tandemschaufel bildet. Ein Tandem-Leitschaufelsegment kann somit in Umfangsrichtung eine oder mehrere Tandem-Leitschaufeln aufweisen. Im Extremfall kann sich ein Leitschaufelsegment dabei um einen Winkelbereich in Umfangsrichtung von 180° erstrecken, so dass nur zwei Leitschaufelsegmente vorhanden sind.

Die einzelnen Tandem-Leitschaufelsegmente werden in Umfangsrichtung nebeneinander angeordnet und an einer Gehäusestruktur fixiert, wobei sie eine Statorstufe eines Axialverdichters bilden, der zwei Leitschaufelreihen umfasst, die durch Tandem-Leitschaufeln gebildet sind.

Es wird allgemein darauf hingewiesen, dass als Materialien für im Strömungspfad hintere (feststehende) Tandem-Leitschaufelsegmente beispielsweise Nickel Basis Legierungen (z.B. Inconel 718) zum Einsatz kommen. Für im Strömungspfad vordere (eventuell verstellbare) Tandem-Leitschaufelsegmente kommen beispielsweise des Weiteren Titanlegierungen (Ti6/4) und Stahllegierungen (A286) zum Einsatz.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Turbofantriebwerks, in dem Tandem-Leitschaufelsegmente anordbar sind, die gemäß der vorliegenden Erfindung hergestellt sind;
- Figur 2: schematisch ein in einem Strömungskanal angeordnetes Tandem-Leitschaufelsegment;
- Figur 3a: schematisch zwei Tandem-Leitschaufelsegmente, die nebeneinander in Umfangsrichtung angeordnet sind, wobei jedes Tandem-Leitschaufelsegment eine Tandem-Leitschaufel umfasst;
- Figur 3b: schematisch eine Anordnung eines Tandem-Leitschaufelsegments, das sich in Umfangsrichtung erstreckt und dabei mehrere Tandem-Leitschaufeln umfasst;
- Figur 4: eine integrale Zwischenstruktur, die beim Herstellen eines Tandem-Leitschaufelsegments gemäß einem ersten Herstellungsverfahren entsteht;
- Figur 5: ein Tandem-Leitschaufelsegment, das gemäß einem zweiten Herstellungsverfahren hergestellt worden ist;
- Figur 6: Teilbereiche eines Tandem-Leitschaufelsegments, das gemäß einem dritten Herstellungsverfahren hergestellt wird;
- Figur 7: einen Zwischenschritt beim Herstellen eines Tandem-Leitschaufelsegments gemäß einem vierten Herstellungsverfahren, wobei ein integraler vorderer Segmentabschnitt und ein integraler hinterer Segmentabschnitt dargestellt sind;
- Figur 8a: einen Zwischenschritt beim Herstellen eines Tandem-Leitschaufelsegments gemäß einem fünften Herstellungsverfahren, wobei ein integraler vorderer Segmentabschnitt und ein integraler hinterer Segmentabschnitt dargestellt sind;
- Figur 8b: das fertig hergestellte Tandem-Leitschaufelsegment gemäß der Figur 8a;
- Figur 9: einen Zwischenschritt beim Herstellen eines Tandem-Leitschaufelsegments gemäß einem sechsten Herstellungsverfahren, wobei sämtliche Komponenten des Tandem-Leitschaufelsegments zunächst gesondert hergestellt worden sind;
- Figur 10: einen Zwischenschritt beim Herstellen eines Tandem-Leitschaufelsegments gemäß einem siebten Herstellungsverfahren, wobei ein integraler vorderer Segmentabschnitt und eine hintere Leitschaufel dargestellt sind;
- Figur 11: ein gemäß einem achten Herstellungsverfahren hergestelltes Tandem-Leitschaufelsegment, wobei das Tandem-Leitschaufelsegment drehbar ausgebildet ist und die beiden Leitschaufeln einander überlappen;
- Figur 12: ein gemäß dem achten Herstellungsverfahren hergestelltes Tandem-Leitschaufelsegment, wobei die beiden Leitschaufeln einander nicht überlappen;
- Figur 13: einen Zwischenschritt beim Herstellen eines Tandem-Leitschaufelsegments gemäß einem neunten Herstellungsverfahren, wobei ein integraler oberer Segmentabschnitt und ein integraler unterer Segmentabschnitt dargestellt sind; und
- Figur 14: einen Zwischenschritt beim Herstellen eines Tandem-Leitschaufelsegments gemäß einem zehnten Herstellungsverfahren, wobei ein integraler vorderer Segmentabschnitt und ein integraler hinterer Segmentabschnitt dargestellt sind.

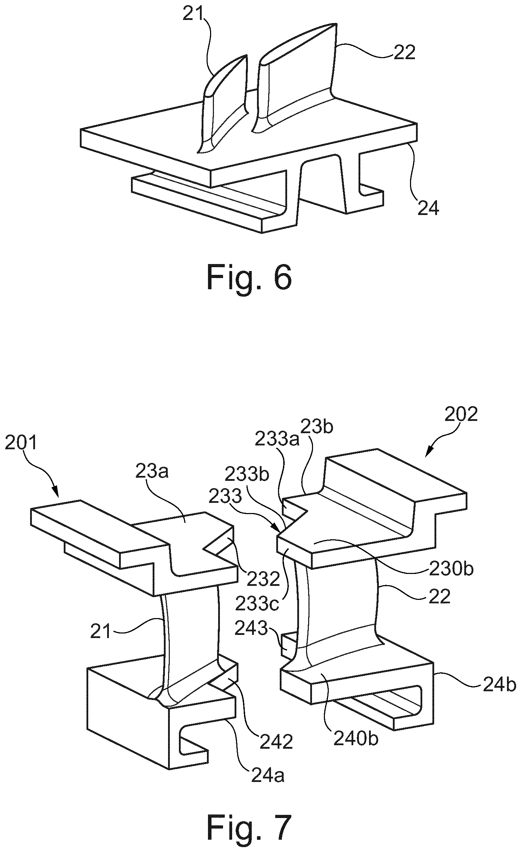

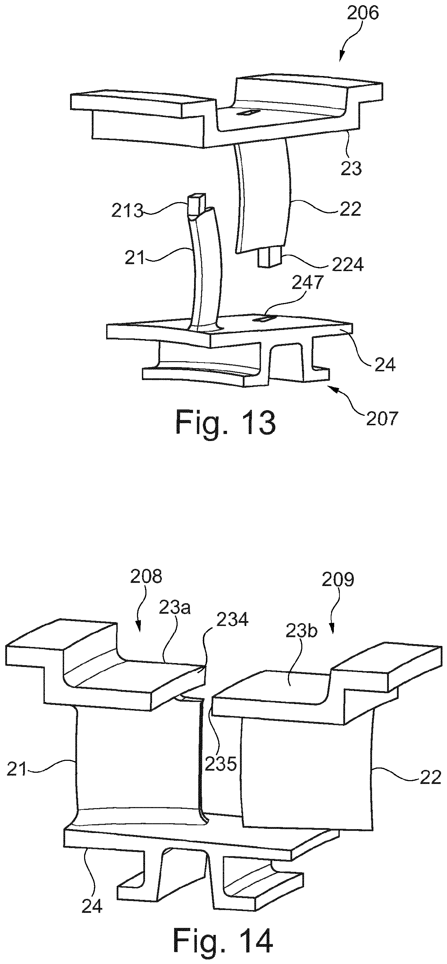

Es wird darauf hingewiesen, dass die Figuren 7 und 13 Ausführungsbeispiele der vorliegenden Erfindung zeigen. Die übrigen Figuren dienen einem besseren Verständnis der vorliegenden Erfindung.

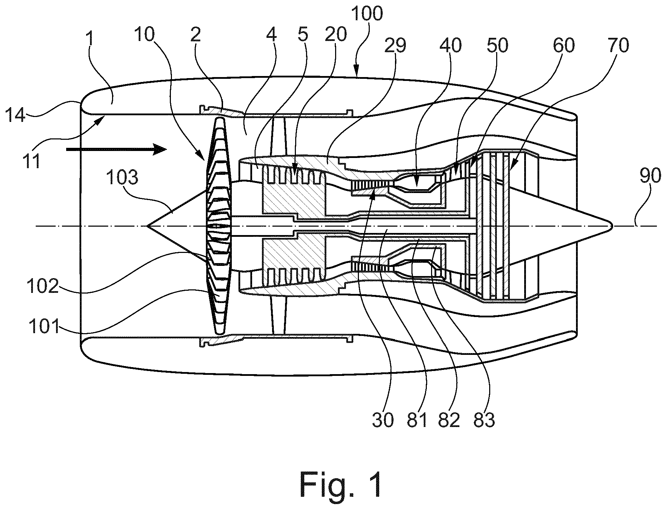

Die Figur 1 zeigt schematisch ein Turbofantriebwerk 100, das eine Fanstufe mit einem Fan 10 als Niederdruckverdichter, einen Mitteldruckverdichter 20, einen Hochdruckverdichter 30, eine Brennkammer 40, eine Hochdruckturbine 50, eine Mitteldruckturbine 60 und eine Niederdruckturbine 70 aufweist.

Der Mitteldruckverdichter 20 und der Hochdruckverdichter 30 weisen jeweils eine Mehrzahl von Verdichterstufen auf, die jeweils eine Rotorstufe und eine Statorstufe umfassen. Das Turbofantriebwerk 100 der Figur 1 weist des Weiteren drei separate Wellen auf, eine Niederdruckwelle 81, die die Niederdruckturbine 70 mit dem Fan 10 verbindet, eine Mitteldruckwelle 82, die die Mitteldruckturbine 60 mit dem Mitteldruckverdichter 20 verbindet und eine Hochdruckwelle 83, die die Hochdruckturbine 50 mit dem Hochdruckverdichter 30 verbindet. Dies ist jedoch lediglich beispielhaft zu verstehen. Wenn das Turbofantriebwerk beispielsweise keinen Mitteldruckverdichter und keine Mitteldruckturbine besitzt, wären nur eine Niederdruckwelle und eine Hochdruckwelle vorhanden.

Das Turbofantriebwerk 100 weist eine Triebwerksgondel 1 auf, die eine Einlauflippe 14 umfasst und innenseitig einen Triebwerkseinlauf 11 ausbildet, der einströmende Luft dem Fan 10 zuführt. Der Fan 10 weist eine Mehrzahl von Fan-Schaufeln 101 auf, die mit einer Fan-Scheibe 102 verbunden sind. Der Annulus der Fan-Scheibe 102 bildet dabei die radial innere Begrenzung des Strömungspfads durch den Fan 10. Radial außen wird der Strömungspfad durch ein Fangehäuse 2 begrenzt. Stromaufwärts der Fan-Scheibe 102 ist ein Nasenkonus 103 angeordnet.

Hinter dem Fan 10 bildet das Turbofantriebwerk 100 einen Sekundärstromkanal 4 und einen Primärstromkanal 5 aus. Der Primärstromkanal 5 führt durch das Kerntriebwerk (Gasturbine), das den Mitteldruckverdichter 20, den Hochdruckverdichter 30, die Brennkammer 40, die Hochdruckturbine 50, die Mitteldruckturbine 60 und die Niederdruckturbine 70 umfasst. Dabei sind der Mitteldruckverdichter 20 und der Hochdruckverdichter 30 von einem Umfangsgehäuse 29 umgeben, dass innenseitig eine Ringraumfläche bildet, die den Primärstromkanal 5 radial außen begrenzt. Radial innen ist der Primärstromkanal 5 durch entsprechende Kranzoberflächen der Rotoren und Statoren der jeweiligen Verdichterstufen bzw. durch die Nabe oder mit der Nabe verbundene Elemente der entsprechenden Antriebswelle begrenzt.

Im Betrieb des Turbofantriebwerks 100 durchströmt ein Primärstrom den Primärstromkanal 5. Der Sekundärstromkanal 4, auch als Nebenstromkanal, Mantelstromkanal oder Bypass-Kanal bezeichnet, leitet im Betrieb des Turbofantriebwerks 100 vom Fan 10 angesaugte Luft am Kerntriebwerk vorbei.

Die beschriebenen Komponenten besitzen eine gemeinsame Symmetrieachse 90. Die Symmetrieachse 90 definiert eine axiale Richtung des Turbofantriebwerks. Eine radiale Richtung des Turbofantriebwerks verläuft senkrecht zur axialen Richtung.

Im Kontext der vorliegenden Erfindung ist die Herstellung von Leitschaufelsegmenten von Bedeutung, die eine Statorstufe im Verdichter bilden. Gemäß der Erfindung hergestellte Leitschaufelsegmente werden dabei beispielsweise im Mitteldruckverdichter 20 oder im Hochdruckverdichter 30 eingesetzt. Gemäß der vorliegenden Erfindung werden dabei Tandem-Leitschaufelsegmente hergestellt, die eine vordere Leitschaufel und eine hintere Leitschaufel aufweisen, die relativ zueinander fest angeordnet sind.

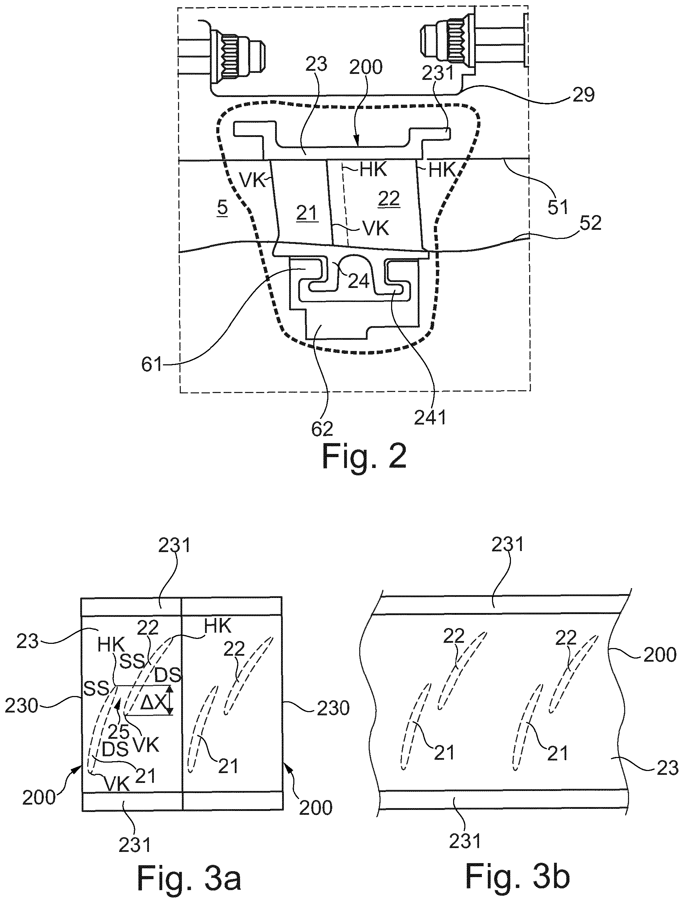

Die Figur 2 und die Figuren 3a, 3b zeigen zunächst den grundsätzlichen Aufbau eines Tandem-Leitschaufelsegments. Gemäß der Figur 2 ist ein Tandem-Leitschaufelsegment 200 im Primärströmungskanal 5, nachfolgend auch als Hauptströmungspfad bezeichnet, angeordnet. Der Hauptströmungspfad 5 umfasst eine radial äußere Strömungspfadberandung 51 und eine radial innere Strömungspfadberandung 52. Die radial äußere Strömungspfadberandung 52 ist durch ein Gehäuse 29 gebildet (beispielsweise das Umfangsgehäuse 29 der Figur 1). Die radial innere Strömungspfadberandung 51 wird durch eine Nabe gebildet, die um eine sich in Längsrichtung erstreckende Rotorachse drehbar gelagert ist.

Das Tandem-Leitschaufelsegment 200 weist eine vordere Leitschaufel 21, eine hintere Leitschaufel 22, eine äußere Plattform 23 und eine innere Plattform 24 auf. Die Leitschaufeln 21, 22 weisen jeweils eine Vorderkante VK und eine Hinterkante HK auf. Wie auch in der Figur 3a dargestellt ist, überlappen sich im dargestellten Ausführungsbeispiel die Hinterkante HK der vorderen Schaufel 21 und die Vorderkante VK der hinteren Schaufel 22. Dies ist jedoch nicht notwendigerweise der Fall. In anderen Ausführungsbeispielen sind die Hinterkante HK der vorderen Schaufel 21 und die Vorderkante VK der hinteren Schaufel 22 axial beabstandet.

Die äußere Plattform 23 und die innere Plattform 24 bilden im Bereich der radial äußeren und der radial inneren Enden der Tandem-Leitschaufeln 21, 22 die Hauptströmungsberandung 51, 52 aus.

Die äußere Plattform 23 weist an ihren axial vorderen und hinteren Enden Befestigungsstrukturen 231 auf, die in axialer Richtung voneinander weg weisen und dazu dienen, die äußere Plattform 23 im Gehäuse 29 zu befestigen, so dass die äußere Plattform 23 in der umgebenden Struktur fixiert ist. Die innere Plattform 24 weist ebenfalls zwei in axialer Richtung voneinander weg weisende Befestigungsstrukturen 241 auf. Diese dienen der Verbindung mit einem Träger 61, der auf seiner Unterseite mit einem Anstreifbelag 62 versehen ist. Der Anstreifbelag 62 steht einer angrenzenden Oberfläche der rotierenden Nabe gegenübersteht. Die innere Plattform 24 und der Träger 61 mit dem Anstreifbelag 62 bilden eine innere Deckbandkonstruktion, die in einer Kavität in der Nabe der Strömungsmaschine eingebettet ist.

Es wird darauf hingewiesen, dass die dargestellten Strukturen der äußeren Plattform 23 mit den Befestigungsstrukturen 231 und der inneren Plattform 24 mit den Befestigungsstrukturen 241 nur beispielhaft zu verstehen sind. Beispielsweise können diese auch mit einander zugewandten Befestigungsstrukturen ausgebildet sein. Für die vorliegende Erfindung kommt es auf die genaue Form der äußeren Plattform 23 und der inneren Plattform 24 sowie der Befestigungsstrukturen 231, 241 nicht an.

Auch wird darauf hingewiesen, dass die Tandem-Leitschaufelsegmente nicht notwendigerweise mit einer inneren Deckbandkonstruktion versehen sein müssen. In alternativen Ausbildungen kann davon abweichend vorgesehen sein, dass die Leitschaufeln 21, 22 an ihren radial inneren Enden frei stehen und dabei durch einen Spalt von der rotierenden Nabe getrennt sind.

Die Figur 3a zeigt zwei Tandem-Leitschaufelsegmente 200, die in Umfangsrichtung nebeneinander angeordnet sind. Die Darstellung zeigt dabei in einer Ansicht von oben die äußere Plattform 23 mit den Befestigungsstrukturen 231. Die vordere Leitschaufel 21 und die hintere Leitschaufel 22 sind gestrichelt dargestellt. Die innere Plattform ist nicht dargestellt. Die Gesamtheit der in Umfangsrichtung angeordneten Tandem-Leitschaufelsegmente 200 bildet dabei einen Stator mit zwei integrierten Schaufelreihen.

Wie in der Figur 3a dargestellt, kann vorgesehen sein, dass zwischen der Druckseite DS der vorderen Schaufel 21 und der Saugseite SS der hinteren Schaufel 22 ein Spalt 25 ausgebildet ist, der eine Passage zwischen den beiden Leitschaufeln 21 und 22 bildet. Dabei überschneiden sich die Hinterkante HK der vorderen Schaufel 21 und die Vorderkante VK der hinteren Schaufel 22 in axialer Richtung um den Betrag Δx. Wie bereits erwähnt, ist dies jedoch nicht notwendigerweise der Fall. Sofern die Hinterkante HK der vorderen Schaufel 21 und die Vorderkante VK der hinteren Schaufel 22 in axialer Richtung beabstandet wird, wird als Spalt der Bereich betrachtet, der sich zwischen Hinterkante HK der vorderen Schaufel 21 und Vorderkante VK der hinteren Schaufel 22 erstreckt.

In der Figur 3a ist auch zu erkennen, dass die äußere Plattform 23 rechteckförmig ausgebildet ist und jeweils zwei in axialer Richtung verlaufende gerade Seitenbegrenzungen 130 aufweist. In alternativen Ausgestaltungen kann vorgesehen sein, dass die Seitenbegrenzungen schräg zur axialen Richtung verlaufen oder einen gewellten Verlauf besitzen.

Die einzelnen äußeren Plattformen 23 sind nebeneinander angeordnet und jeweils im Gehäuse fixiert. Zusätzlich kann vorgesehen sein, dass sie entlang ihrer Seitenbegrenzungen 130 einander verbunden werden.

Die Figur 3b zeigt ein Ausführungsbeispiel, bei dem ein Tandem-Leitschaufelsegment 200 eine größere Erstreckung in Umfangsrichtung aufweist und zwei oder mehr Tandem-Leitschaufeln mit jeweils einer vorderen Leitschaufel 21 und einer hinteren Leitschaufel 22 aufweist.

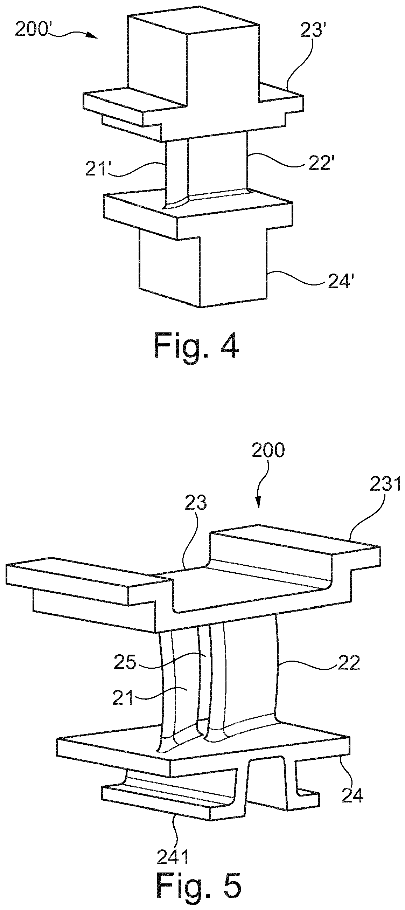

Die Figur 4 illustriert ein erstes Verfahren zur Herstellung eines Tandem-Leitschaufelsegments. Zur Herstellung eines solchen Segments wird zunächst eine integrale Zwischenstruktur 200' hergestellt, die in der Figur 4 dargestellt ist. Die Zwischenstruktur 200' wird beispielsweise durch Schmieden oder durch Gießen, beispielsweise durch Metallpulver-Spritzgießen hergestellt. Sie umfasst dabei sämtliche Materialbereiche, die das spätere Tandem-Leitschaufelsegment bilden. So umfasst sie einen Bereich 21', aus dem die endgültige vordere Leitschaufel gebildet wird, einen Bereich 22', aus dem die endgültige hintere Leitschaufel gebildet wird, einen Bereich 23', aus dem die endgültige äußere Plattform gebildet wird und einen Bereich 24', aus dem die endgültige innere Plattform gebildet wird. Dabei ist vorgesehen, dass in der Zwischenstruktur 200' der Bereich, in dem im fertig hergestellten Tandem-Leitschaufelsegment ein Spalt zwischen der vorderen Leitschaufel und der hinteren Leitschaufel vorgesehen ist, mit Material gefüllt ist.

Es ist vorgesehen, dass die hergestellte Zwischenstruktur zu dem endgültigen Tandem-Leitschaufelsegment weiterverarbeitet wird. Das Weiterverarbeiten umfasst dabei das Herstellen eines Spalts in der Zwischenstruktur 200' zur Trennung der vorderen Leitschaufel 21 und der hinteren Leitschaufel 22. Dieser Spalt kann durch Fräsen oder durch Abtragen, beispielsweise durch ein Erosionsverfahren hergestellt werden. Des Weiteren können die Leitschaufeln 21, 22 und die Plattformen 23, 24 zur Herstellung ihrer endgültigen Form eine weitere Bearbeitung, insbesondere durch spanende Verfahren erhalten.

Die Figur 5 zeigt das Ergebnis eines zweiten Herstellungsverfahrens, bei dem ein Tandem-Leitschaufelsegment 200 bestehend aus zwei Leitschaufeln 21, 22, einer äußeren Plattform 23 mit Befestigungsstrukturen 231 und einer inneren Plattform 24 mit Befestigungsstrukturen 241 vollständig integral aus einem Stück durch ein Trennverfahren, beispielsweise durch ein spanendes Verfahren wie zum Beispiel ein Fräsverfahren hergestellt wird.

Die Figur 6 zeigt einen Zwischenstand bei dem Herstellen eines Tandem-Leitschaufelsegments gemäß einem dritten Herstellungsverfahren, bei dem das Tandem-Leitschaufelsegment durch ein additives Fertigungsverfahren (3D-Druck) hergestellt wird, wobei Lage für Lage aufgetragen wird. Das auf diese Weise hergestellte Tandem-Leitschaufelsegment kann nachbearbeitet werden, beispielsweise um die Oberflächengenauigkeit zu reduzieren.

Die Figur 7 illustriert ein weiteres Herstellungsverfahren, bei dem zunächst ein integraler vorderer Segmentabschnitt 201 und ein integraler hinterer Segmentabschnitt 202 hergestellt werden. Der integrale vordere Segmentabschnitt 201 umfasst die vordere Leitschaufel 21, einen vorderen Abschnitt 23a der äußeren Plattform und einen vorderen Abschnitt 24a der inneren Plattform. Der integrale hintere Segmentabschnitt 202 umfasst die hintere Leitschaufel 22, einen hinteren Abschnitt 23b der äußeren Plattform und einen hinteren Abschnitt 24b der inneren Plattform.

Der integrale vordere Segmentabschnitt 201 und der integrale hintere Segmentabschnitt 202 sind beispielsweise durch Schmieden oder ein Gussverfahren verbunden mit einer spanenden Nachbearbeitung hergestellt.

Es ist vorgesehen, dass der vordere Abschnitt 23a der äußeren Plattform eine hintere Begrenzungslinie 232 und der vordere Abschnitt 24a der inneren Plattform eine hintere Begrenzungslinie 242 aufweist. Die beiden Begrenzungslinien 232, 242 sind dabei dem hinteren Segmentabschnitt 202 zugewandt und verlaufen - wenn das fertig hergestellte Tandem-Leitschaufelsegment zur Bildung eines Stators in einem Triebwerk eingebaut ist - im Wesentlichen in Umfangsrichtung. In entsprechender Weise weist der hintere Abschnitt 23b der äußeren Plattform eine vordere Begrenzungslinie 233 und der hintere Abschnitt 24b der inneren Plattform eine vordere Begrenzungslinie 243 auf, wobei die Begrenzungslinien 233, 243 den Begrenzungslinien 232, 242 zugewandt sind. Die Verbindung des vorderen Segmentabschnitts 201 mit dem hinteren Segmentabschnitt 202 erfolgt durch Verbindung dieser Teile entlang der Begrenzungslinien 232, 233 und 242, 243. Dabei wird darauf hingewiesen, dass es sich bei den Begrenzungslinien genau genommen um Begrenzungsflächen handelt, da sie eine radiale Ausdehnung besitzen. Das Verbinden entlang der Begrenzungslinien erfolgt beispielsweise über ein Hartlöten.

Es liegt nun die Besonderheit vor, dass der vordere Segmentabschnitt 201 derart geformt ist, dass die Begrenzungslinie 232 der äußeren Plattform und die Begrenzungslinie 242 der inneren Plattform beide Z-förmig ausgebildet sind. In entsprechender Weise sind auch die Begrenzungslinien 233 und 243 Z-förmig ausgebildet. Die Begrenzungslinien 232, 233, 242, 243 weisen somit jeweils zwei parallele, zueinander versetzte Abschnitte und einen schräg verlaufenden, diese beiden Abschnitte verbindenden Abschnitt auf. Dies ist exemplarisch für die Begrenzungslinie 233 gezeigt, die parallele Abschnitte 233a, 233c und einen verbindenden Abschnitt 233b aufweist.

Eine solche Ausgestaltung ist mit mehreren Vorteilen verbunden. Ein Vorteil besteht darin, dass es aufgrund der Z-Form möglich ist, die Leitschaufeln 21, 22, obwohl sie sich im fertig hergestellten Zustand überschneiden, vollständig durch die jeweiligen Abschnitte 23a, 24a, 23b, 24b der Plattformen abzudecken, so dass sie nicht über die jeweilige Begrenzungslinie 232, 233, 242, 243 abstehen. Denn die Z-Form stellt an jedem Abschnitt 23a, 24a, 23b, 24b der äußeren Plattform und der inneren Plattform aufgrund ihrer Form einen in Richtung des anderen Abschnitts ragenden Bereich bereit, in dem die jeweilige Leitschaufel 21, 22 ausgebildet worden ist. So bildet beispielsweise der hintere Abschnitt 23b der äußeren Plattform einen in Richtung des vorderen Abschnitts 23a ragenden Bereich 230b aus und bildet der hintere Abschnitt 24b der inneren Plattform einen in Richtung des vorderen Abschnitts 24a ragenden Bereich 240b aus, die jeweils die dazwischen verlaufende hintere Schaufel 22 vollständig abdecken, so dass diese strukturell fest eingebunden ist.

Ein weiterer Vorteil besteht darin, dass die Z-Form der einander zugewandten Begrenzungslinien 232, 233, 242, 243 der beiden Segmentabschnitte 201, 202 es ermöglicht, diese beiden Segmentabschnitte exakt zueinander zu positionieren. Denn über die Z-Form wird eine Art Anschlag in Umfangsrichtung bereitgestellt, über den sichergestellt werden kann, dass die beiden Segmentabschnitte 201, 202 exakt in der gewünschten Relativposition miteinander verbunden werden können.

Alternativ sind die Begrenzungslinien 232, 233, 242, 243 nicht Z-förmig, sondern S-förmig ausgebildet. Auch bei einer S-Form werden Bereiche bereitgestellt, die in Richtung des anderen Segmentabschnitts ragen.

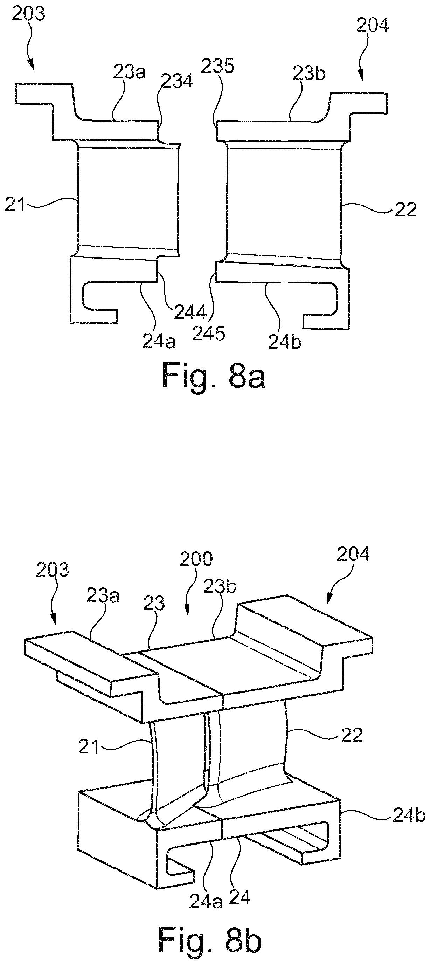

Die Figuren 8a, 8b illustrieren ein weiteres Herstellungsverfahren für ein Tandem-Leitschaufelsegment, das dem Herstellungsverfahren der Figur 7 verwandt ist. Auch bei dem Ausführungsbeispiel der Figuren 8a, 8b werden zunächst ein integraler vorderer Segmentabschnitt 203 und ein integraler hinterer Segmentabschnitt 204 hergestellt. Der vordere Segmentabschnitt 203 umfasst einen vorderen Abschnitt 23a der äußeren Plattform, einen vorderen Abschnitt 24a der inneren Plattform und eine vordere Leitschaufel 21. Der hintere Segmentabschnitt 204 um fast einen hinteren Abschnitt 23b der äußeren Plattform, einen hinteren Abschnitt 24b der inneren Plattform und eine hintere Leitschaufel 22. Ahnlich wie bei der Figur 7 weisen die Abschnitte 23a, 24a, 23b, 24b jeweils einander zugewandte Begrenzungslinien 234, 244, 235, 245 auf. Diese verlaufen jedoch gradlinig, wobei sie - wenn das fertig hergestellte Tandem-Leitschaufelsegment zur Bildung eines Stators in einem Triebwerk eingebaut ist - im Wesentlichen in Umfangsrichtung ausgerichtet sind.

Um trotzdem zu erreichen, dass sich die Leitschaufeln 21, 22 sich im fertig hergestellten Zustand überschneiden, steht die vordere Leitschaufel 21 über die hinteren Begrenzungslinien 234, 244 in Richtung des hinteren Segmentabschnitts 204 ab. Zwischen dem überstehenden Teil der Leitschaufel 21 und den angrenzenden Abschnitten 23b, 24b der äußeren und inneren Plattform ist dabei notwendigerweise ein Spalt ausgebildet. Alternativ oder ergänzend kann vorgesehen sein, dass die hintere Leitschaufel 22 über die vorderen Begrenzungslinien 235, 245 in Richtung des vorderen Segmentabschnitts 203 vorsteht.

Der integrale vordere Segmentabschnitt 203 und der integrale hintere Segmentabschnitt 204 sind beispielsweise durch Schmieden oder ein Gussverfahren (einschließlich Metallpulver-Spritzgießen) verbunden mit einer spanenden Nachbearbeitung hergestellt. Die Verbindung der beiden Segmentabschnitte 203, 204 erfolgt entlang der Begrenzungslinien 234, 244, 235, 245, beispielsweise durch Hartlöten.

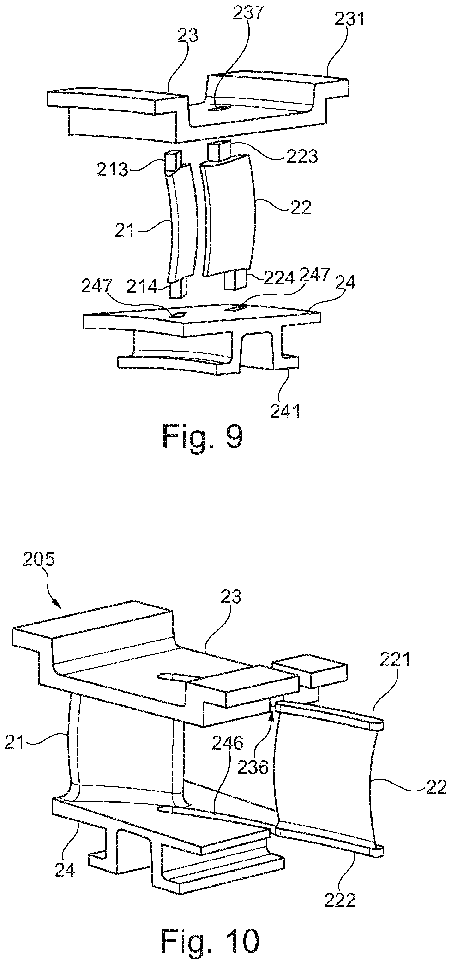

Die Figur 9 illustriert ein Herstellungsverfahren, bei dem sämtliche Komponenten des Tandem-Leitschaufelsegment zunächst als gesonderte Teile hergestellt werden. So werden die vordere Leitschaufel 21, die hintere Leitschaufel 22, die äußere Plattform 23 und die innere Plattform 24 als gesonderte Teile hergestellt. Es liegt ein vollständig modulares System vor. Die einzelnen Teile werden beispielsweise durch Schmieden oder Metallpulver-Spritzgießen hergestellt. Es kann jeweils eine Herstellung auf das Endmaß erfolgen, so dass die Teile nur noch miteinander verbunden werden müssen.

Zur Verbindung der Teile weisen diese Strukturen für eine Steckverbindung auf. So ist im dargestellten Ausführungsbeispiel vorgesehen, dass die Leitschaufeln 21,22 an ihrem radial äußeren Enden Vorsprünge 213, 223 und an ihren radial inneren Enden Vorsprünge 214, 224 aufweisen. Mit diesen Vorsprüngen korrespondieren Aussparungen 237 in der äußeren Plattform 23 und Aussparungen 247 in der inneren Plattform 24. Die Steckverbindungen können zusätzlich beispielsweise durch Hartlöten gesichert werden. Alternativ zu den Steckverbindungen können andere Ausführungen des Formschlusses zur Anwendung kommen.

Die Figur 10 illustriert ein weiteres Herstellungsverfahren. Dabei ist vorgesehen, dass die äußere Plattform 23, eine der Leitschaufeln, im dargestellten Ausführungsbeispiel die vordere Leitschaufel 21, und die untere Plattform 24 als integrales Bauteil 205 hergestellt werden. Die Herstellung erfolgt beispielsweise durch Schmieden oder ein Gussverfahren verbunden mit einer spanenden Nachbearbeitung. Dagegen wird die andere Leitschaufel, im dargestellten Ausführungsbeispiel die hintere Leitschaufel 22 als gesondertes Bauteil hergestellt. Dabei kann vorgesehen sein, dass die hintere Leitschaufel 22 bereits exakt auf das Endmaß hergestellt ist. Die Herstellung erfolgt beispielsweise durch Schmieden oder Metallpulver-Spritzgießen.

Zur Verbindung der hinteren Leitschaufel 22 mit dem integralen Bauteil 205 ist in der äußeren Plattform 23 eine längliche Aufnahmestruktur 236, beispielsweise in Form eines Schlitzes oder einer Nut ausgebildet. In entsprechender Weise und in gleicher Orientierung ist in der unteren Plattform 23 eine längliche Aufnahmestruktur 246 ausgebildet. Die hintere Leitschaufel 22 weist an ihrem radial äußeren Ende 221 und an ihrem radial inneren Ende 222 jeweils eine in ihrer Form mit der Aufnahmestruktur 236, 246 korrespondierende Verdickung 221, 222 auf. Zur Verbindung wird die hintere Leitschaufel 22 mit ihren Verbindungsstrukturen 221, 222 in die länglichen Aufnahmestrukturen 236, 246 der äußeren Plattform 23 und der inneren Plattform 24 eingeschoben. Die Verbindung kann zusätzlich beispielsweise durch Hartlöten gesichert werden.

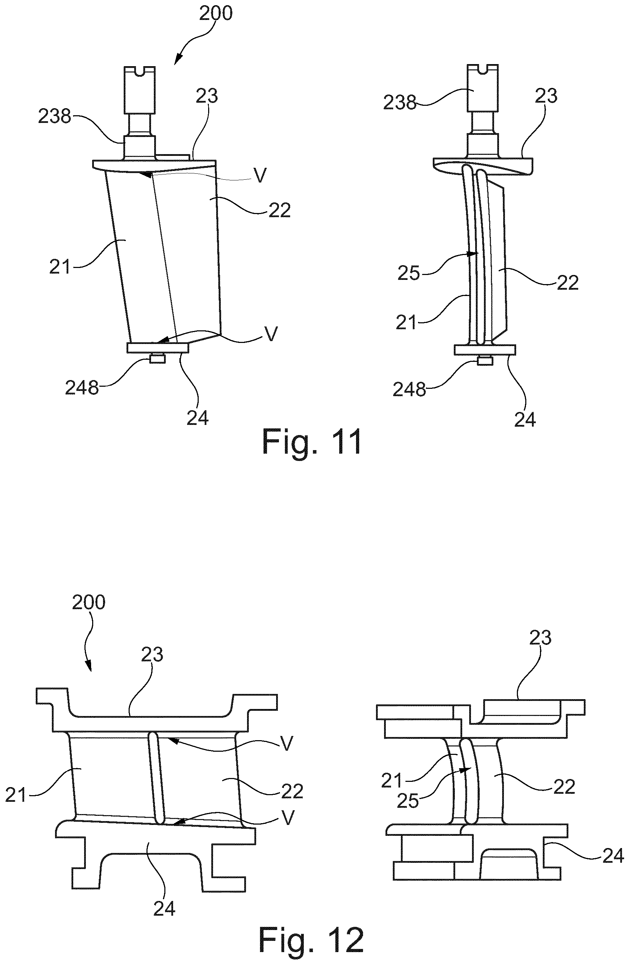

In den Figuren 9 und 10 erfolgte eine Verbindung gesondert hergestellter Leitschaufeln mit der äußeren Plattform 23 und der inneren Plattform 24 durch Steckverbindungen oder andere formschlüssige Verbindungen. Wie nachfolgend anhand der Figuren 11 und 12 illustriert werden wird, kann eine Verbindung von Schaufel und Plattform alternativ beispielsweise durch Reibschweißen erfolgen.

Die Figur 11 illustriert ein solches Herstellungsverfahren. Es ist ein Tandem-Leitschaufelsegment 200 dargestellt, dass abweichend von den bisher dargestellten Tandem-Leitschaufelsegment verstellbar ausgebildet ist und Zapfen 238, 248 für eine drehbare Lagerung aufweist. Die Leitschaufeln 21, 22 überschneiden sich in axialer Richtung unter Ausbildung eines Spalts 25, der in der rechten Darstellung der Figur 11 zu erkennen ist.

Die Leitschaufel 21, 22 sind durch Einsatz eines Reibschweißverfahrens mit den Plattformen 23, 24 verbunden. Die Schweißnaht ist schematisch mit V gekennzeichnet. Dabei ist vorgesehen, dass die Leitschaufeln 21,22 beispielsweise durch Schmieden oder Metallpulver-Spritzgießen auf Endmaß hergestellt sind. Die Plattformen 23, 24 sind in traditioneller Weise beispielsweise durch Schmieden in Verbindung mit spanenden Verfahren hergestellt.

Für das Reibschweißen ist vorgesehen, dass die Leitschaufel 21, 22 in einem speziellen Werkzeug genau positioniert und fixiert werden. Anschließend werden die äußere Plattform 23 und die innere Plattform 24 mittels Reibschweißen mit den Leitschaufel 21, 22 verbunden. Durch die genaue Positionierung und Fixierung der Leitschaufel 21, 22 wird sichergestellt, dass deren relative Position und der Spalt 25 exakt fixiert werden. Anschließend wird die erzeugte Schweißnaht mechanisch, beispielsweise durch Fräsen und Drehverfahren fertig bearbeitet. Auch kann vorgesehen sein, dass die Plattformen 23, 24 einschließlich der Zapfen 238, 248 nach dem Reibschweißen mechanisch fertig bearbeitet werden.

Die Figur 12 zeigt ein weiteres Ausführungsbeispiel, bei dem zwei Leitschaufeln 20, 22 mittels Reibschweißen mit einer äußeren Plattform 23 und einer inneren Plattform 24 verbunden werden. Beim Ausführungsbeispiel der Figur 12 sind die Leitschaufel 21, 22 nicht überlappend ausgebildet. Durch den axialen Versatz ist ein Spalt 25 vorhanden. Die Schweißnaht ist schematisch mit V gekennzeichnet. Die Herstellung erfolgt wie in Bezug auf die Figur 11 beschrieben.

Die Figur 13 illustriert ein weiteres Herstellungsverfahren. Bei diesem wird zunächst ein erstes integrales Bauteil 206 hergestellt, dass die äußere Plattform 23 und eine der Leitschaufeln, im dargestellten Ausführungsbeispiel die hintere Leitschaufel 22 umfasst. Des Weiteren wird ein zweites integrales Bauteil 207 hergestellt, dass die innere Plattform 24 und die vordere Leitschaufel 21 umfasst. Die Herstellung der beiden integralen Bauteile 206, 207 erfolgt beispielsweise durch Schmieden oder ein Gussverfahren verbunden mit einer spanenden Nachbearbeitung.

Die beiden integralen Bauteile 206, 207 werden verbunden, in dem das radial äußere Schaufelende der vorderen Schaufel 21 mit der Plattform 23 und das radial innere Schaufelende der Schaufel 22 mit der inneren Plattform 24 verbunden wird. Dies erfolgt beispielsweise über Steckverbindungen, wobei die Leitschaufeln an ihren Enden Vorsprünge 213, 224 aufweisen, die in entsprechende Aussparungen in der äußeren Plattform 23 und der inneren Plattform 24 eingesteckt werden, wobei nur die Aussparung 247 in der inneren Plattform 24 sichtbar ist. Die Steckverbindung kann beispielsweise durch Hartlöten weitergehend gesichert werden. Die Form der dargestellten Verbindung ist dabei nur beispielhaft zu verstehen.

Die Figur 14 illustriert ein weiteres Herstellungsverfahren, das Ähnlichkeiten zu dem Herstellungsverfahren der Figur 7 und der Figuren 8a, 8b aufweist. So wird ein vorderer integraler Segmentabschnitt 208 hergestellt, der die vordere Leitschaufel 21, einen vorderen Abschnitt 23a der äußeren Plattform und die gesamte innere Plattform 24 umfasst. Des Weiteren wird ein hinterer integraler Segmentabschnitt 209 hergestellt, der die hintere Leitschaufel 22 und einen hinteren Abschnitt 23b der äußeren Plattform umfasst. Die hintere Leitschaufel 22 ist dabei als Kragarm ausgeführt, d.h. ohne weitere Strukturen an ihrem radial inneren Ende ausgebildet. Die beiden Segmentabschnitte 208, 209 werden beispielsweise durch Schmieden oder durch ein Gussverfahren hergestellt. Zusätzlich kann eine spanende Bearbeitung des geschmiedeten oder gegossenen Teils erfolgen.

Zur Verbindung der beiden Segmentabschnitte 208, 209 erfolgt entsprechend dem in Bezug auf die Figuren 8a, 8b beschriebenen Verfahren, wobei geradlinige Begrenzungslinien 234, 235 am vorderen Abschnitt 23a und am hinteren Abschnitt 23b der äußeren Plattform miteinander verbunden werden.

Es wird darauf hingewiesen, dass bei sämtlichen beschriebenen Ausführungsbeispielen die äußere Plattform und die innere Plattform im fertig hergestellten Zustand gradlinige, in axialer Richtung verlaufende Seitenbegrenzungen aufweist, entsprechend der Darstellung der Figur 3a. Dieses jedoch nur beispielhaft zu verstehen und nicht notwendigerweise der Fall.

Die vorliegende Erfindung beschränkt sich in ihrer Ausgestaltung nicht auf die vorstehend beschriebenen Ausführungsbeispiele. Beispielsweise sind die dargestellten Formen der Leitschaufeln, der oberen Plattform und der unteren Plattform lediglich beispielhaft zu verstehen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Verfahren zum Herstellen eines Tandem-Leitschaufelsegments (200), das eine äußere Plattform (23), eine vordere Leitschaufel (21) und eine hintere Leitschaufel (22) umfasst, wobei die vordere Leitschaufel (21) und die hintere Leitschaufel (22) relativ zueinander fest angeordnet sind und in axialer Richtung einander überlappen, wobei das Verfahren umfasst:
- Herstellen eines integralen vorderen Segmentabschnitts (201), der die vordere Leitschaufel (21) und einen vorderen Abschnitt (23a) der äußeren Plattform umfasst,
- Herstellen eines integralen hinteren Segmentabschnitts (202), der die hintere Leitschaufel (22) und einen hinteren Abschnitt (23b) der äußeren Plattform umfasst, und
- Verbinden der beiden Segmentabschnitte (201, 202), wobei
- der vordere Segmentabschnitt (201) im Bereich der äußeren Plattform eine hintere Begrenzungslinie (232) zum hinteren Segmentabschnitt (202) ausbildet,
- der hintere Segmentabschnitt (202) im Bereich der äußeren Plattform eine vordere Begrenzungslinie (233) zum vorderen Segmentabschnitt (201) aufweist,
**dadurch gekennzeichnet, dass**
- die beiden Begrenzungslinien (232, 233) S-förmig oder Z-förmig ausgebildet werden, wobei die vordere Leitschaufel (21) nicht über die hintere Begrenzungslinie (232) und die hintere Leitschaufel (22) nicht über die vordere Begrenzungslinie (233) absteht, und
- die beiden Segmentabschnitte (201, 202) entlang der beiden Begrenzungslinie (232, 233) miteinander verbunden werden.

2. Verfahren nach Anspruch 1, **dadurch gekennzeichnet, dass** das herzustellende Tandem-Leitschaufelsegment (200) zusätzlich eine innere Plattform (24) umfasst, wobei der vordere Segmentabschnitt (201) des Weiteren einen vorderen Abschnitt (24a) der inneren Plattform (24) und der hintere Segmentabschnitt (202) des Weiteren einen hinteren Abschnitt (24b) der inneren Plattform (24) umfasst.

3. Verfahren nach Anspruch 2, **dadurch gekennzeichnet, dass**
- der vordere Segmentabschnitt (201) im Bereich der inneren Plattform (24) eine hintere Begrenzungslinie (242) zum hinteren Segmentabschnitt (202) ausbildet,
- der hintere Segmentabschnitt (202) im Bereich der inneren Plattform (24) eine vordere Begrenzungslinie (243) zum vorderen Segmentabschnitt (201) aufweist,
- die beiden Begrenzungslinien (242, 243) S-förmig oder Z-förmig ausgebildet werden derart, dass die vordere Leitschaufel (21) nicht über die hintere Begrenzungslinie (242) und die hintere Leitschaufel (22) nicht über die vordere Begrenzungslinie (243) absteht, und
- die beiden Segmentabschnitte (201, 202) zusätzlich entlang der beiden Begrenzungslinien (242, 243) im Bereich der inneren Plattform (24) miteinander verbunden werden.

4. Verfahren zum Herstellen eines Tandem-Leitschaufelsegments (200), das eine äußere Plattform (23), ein innere Plattform (24), eine vordere Leitschaufel (21) und eine hintere Leitschaufel (22) umfasst, wobei die vordere Leitschaufel (21) und die hintere Leitschaufel (22) relativ zueinander fest angeordnet sind, **gekennzeichnet durch:**
- Herstellen der äußeren Plattform (23) und einer der Leitschaufeln (22) als erstes integrales Bauteil (206);
- Herstellen der inneren Plattform (24) und der anderen Leitschaufel (21) als zweites integrales Bauteil (207); und
- Verbinden der beiden integralen Bauteile (206, 207), indem das radial äußere Schaufelende der anderen Leitschaufel (21) mit der äußeren Plattform (23) und das radial innere Schaufelende der einen Leitschaufel (22) mit der inneren Plattform (24) verbunden wird.

5. Verfahren nach Anspruch 4, **dadurch gekennzeichnet, dass** die beiden integralen Bauteile (206, 207) verbunden werden, indem Vorsprünge (213, 224) der Leitschaufeln (21, 22) jeweils in Aussparungen (247) der Plattformen (23, 24) eingesetzt werden.

## Claims

1. Method for producing a tandem guide vane segment (200) which comprises an outer platform (23), a front guide vane (21) and a rear guide vane (22), the front guide vane (21) and the rear guide vane (22) being arranged fixedly relative to one another and overlapping one another in the axial direction, and the method comprising:
- producing of an integral front segment section (201) which comprises the front guide vane (21) and a front section (23a) of the outer platform,
- producing of an integral rear segment section (202) which comprises the rear guide vane (22) and a rear section (23b) of the outer platform, and
- connecting of the two segment sections (201, 202),
- the front segment section (201) configuring, in the region of the outer platform, a rear boundary line (232) with respect to the rear segment section (202),
- the rear segment section (202) having, in the region of the outer platform, a front boundary line (233) with respect to the front segment section (201),
**characterized in that**
- the two boundary lines (232, 233) are of S-shaped or Z-shaped configuration, the front guide vane (21) not projecting beyond the rear boundary line (232), and the rear guide vane (22) not projecting beyond the front boundary line (233), and
- the two segment sections (201, 202) being connected to one another along the two boundary lines (232, 233).

2. Method according to Claim 1, **characterized in that** the tandem guide vane segment (200) to be produced additionally comprises an inner platform (24), the front segment section (201) comprising, furthermore, a front section (24a) of the inner platform (24), and the rear segment section (202) comprising, furthermore, a rear section (24b) of the inner platform (24).

3. Method according to Claim 2, **characterized in that**
- the front segment section (201) configures, in the region of the inner platform (24), a rear boundary line (242) with respect to the rear segment section (202),
- the rear segment section (202) has, in the region of the inner platform (24), a front boundary line (243) with respect to the front segment section (201),
- the two boundary lines (242, 243) are of S-shaped or Z-shaped configuration, in such a way that the front guide vane (21) does not project beyond the rear boundary line (242), and the rear guide vane (22) does not project beyond the front boundary line (243), and
- the two segment sections (201, 202) additionally are connected to one another along the two boundary lines (242, 243) in the region of the inner platform (24).

4. Method for producing a tandem guide vane segment (200) which comprises an outer platform (23), an inner platform (24), a front guide vane (21) and a rear guide vane (22), the front guide vane (21) and the rear guide vane (22) being arranged fixedly relative to one another, **characterized by**:
- producing of the outer platform (23) and one of the guide vanes (22) as a first integral component (206) ;
- producing of the inner platform (24) and the other guide vane (21) as a second integral component (207); and
- connecting of the two integral components (206, 207) by the radially outer vane end of the other guide vane (21) being connected to the outer platform (23), and the radially inner vane end of the one guide vane (22) being connected to the inner platform (24).

5. Method according to Claim 4, **characterized in that** the two integral components (206, 207) are connected by projections (213, 224) of the guide vanes (21, 22) being inserted in each case into cut-outs (247) of the platforms (23, 24).

## Revendications

1. Procédé de fabrication d'un segment d'aube directrice en tandem (200), comprenant une plateforme extérieure (23), une aube directrice avant (21) et une aube directrice arrière (22), l'aube directrice avant (21) et l'aube directrice arrière (22) étant montées fixes l'une par rapport à l'autre et en chevauchement l'une sur l'autre dans la direction axiale, le procédé comprenant :
la fabrication d'une partie de segment monobloc avant (201) qui comprend l'aube directrice avant (21) et une partie avant (23a) de la plateforme extérieure ;
la fabrication d'une partie de segment (202) monobloc arrière qui comprend l'aube directrice arrière (22) et une partie arrière (23b) de la plateforme extérieure ; et
l'assemblage des deux parties de segment (201, 202) ;
la partie de segment avant (201) constituant, dans la région de la plateforme extérieure, une ligne de délimitation arrière (232) par rapport à la partie de segment arrière (202) ;
la partie de segment arrière (202) présentant, dans la région de la plateforme extérieure, une ligne de délimitation avant (233) par rapport à la partie de segment avant (201) ;
**caractérisé en ce que :**
les deux lignes de délimitation (232, 233) sont en forme de S ou de Z, l'aube directrice avant (21) ne mordant pas sur la ligne de délimitation arrière (232) et l'aube directrice arrière (22) ne mordant pas sur la ligne de délimitation avant (233) ;
et les deux parties de segment (201, 202) étant assemblées l'une avec l'autre le long des deux lignes de délimitation (232, 233).

2. Procédé selon la revendication 1, **caractérisé en ce que** l'segment d'aube directrice en tandem (200) à fabriquer comprend en outre une plateforme intérieure (24), la partie de segment avant (201) comprenant en outre une partie avant (24a) de la plateforme intérieure (24) et la partie de segment arrière (202) comprenant en outre une partie arrière (24b) de la plateforme intérieure (24).

3. Procédé selon la revendication 2, **caractérisé en ce que :**
dans la région de la plateforme intérieure (24), la partie de segment avant (201) constitue une ligne de délimitation arrière (242) par rapport à la partie de segment arrière (202) ;
dans la région de la plateforme intérieure (24), la partie de segment arrière (202) présente une ligne de délimitation avant (243) par rapport à la partie de segment avant (201) ;
les deux lignes de délimitation (242, 243) en forme de S ou de Z sont telles que l'aube directrice avant (21) ne mord pas sur la ligne de délimitation arrière (242) et que l'aube directrice arrière (22) ne mord pas sur la ligne de délimitation avant (243) ;
et, dans la région de la plateforme intérieure (24), les deux parties de segment (201, 202) sont en outre assemblées l'une avec l'autre le long des deux lignes de délimitation (242, 243).

4. Procédé de fabrication d'un segment d'aube directrice en tandem (200) comprenant une plateforme extérieure (23), une plateforme intérieure (24), une aube directrice avant (21) et une aube directrice arrière (22), l'aube directrice avant (21) et l'aube directrice arrière (22) étant montées fixes l'une par rapport à l'autre, **caractérisé par :**
la fabrication de la plateforme extérieure (23) et de l'une des aubes directrices (22) sous la forme d'un premier composant monobloc (206) ;
la fabrication de la plateforme intérieure (24) et de l'autre aube directrice (21) sous la forme d'un deuxième composant monobloc (207) ;
l'assemblage des deux composants monoblocs (206, 207) en assemblant l'extrémité radialement extérieure de l'autre aube directrice (21) avec la plateforme extérieure (23) et en assemblant l'extrémité radialement intérieure de la première aube directrice (22) avec la plateforme intérieure (24).

5. Procédé selon la revendication 4, **caractérisé en ce que** les deux composants monoblocs (206, 207) sont assemblés par le fait que des saillies (213, 224) des aubes directrices (21, 22) sont chacune insérées dans des évidements (247) des plateformes (23, 24).
